# FASCICULE DE BREVET EUROPEEN

(11) **EP 1 523 232 B1**
(45) Date de publication et mention de la délivrance du brevet: **07.12.2005**
(21) Numéro de dépôt: 03763924.2
(22) Date de dépôt: 01.07.2003
(51) Int. Cl.: A01D 78/12

(54) **MACHINE DE FENAISON**
HEUMASCHINE
HAY MAKING MACHINE

(30) Priorité: 15.07.2002 FR 0209172
(43) Date de publication de la demande: 20.04.2005
(73) Titulaire: KUHN S.A., 67706 Saverne Cedex (FR)
(72) Inventeur: BERNE, Stephane, F-67700 Saverne (FR)
(74) Mandataire: Andres, Jean-Claude
(86) Numéro de dépôt international: PCT/FR2003/002046
(87) Numéro de publication internationale: WO 2004/006648

(56) Documents cités:
- EP-A- 0 590 311
- FR-A- 2 010 323
- US-A- 5 791 133

## Description

La présente invention se rapporte au domaine technique général du machinisme agricole et en particulier au domaine des machines de fenaison.

Plus précisément, la présente invention concerne un rotor d'une machine de fenaison, ledit rotor comporte un boîtier entraîné en rotation lors du travail autour d'un axe dirigé vers le haut et au moins un bras oscillant disposé dans un plan sensiblement perpendiculaire audit axe dirigé vers le haut, lequel bras oscillant étant destiné à supporter des outils de travail, ledit au moins un bras oscillant est lié audit boîtier au moyen d'au moins un élément de guidage en rotation de manière à pouvoir tourner sur lui-même.

Le document **EP 0 590 311 A1** décrit un rotor d'une machine de fenaison, ledit rotor comportant un boîtier entraîné en rotation lors du travail autour d'un axe vertical et une multitude de bras oscillants disposés en forme de rayons dans un plan horizontal. Chaque bras oscillant est lié de manière pivotante audit boîtier au moyen d'une liaison respective. Ainsi lesdits bras oscillants peuvent pivoter par rapport audit boîtier autour de leur axe longitudinal respectif A l'une de ses extrémités, ledit bras oscillant comporte un galet excentré dudit axe longitudinal correspondant. Ce galet est destiné à se prendre dans une came, laquelle est fixe lors du travail. Cet agencement du galet et de la came engendre le mouvement d'oscillation dudit bras autour de l'axe longitudinal respectif lors de la rotation du boîtier. Dans ce document antérieur, le boîtier est constitué d'une partie supérieure et d'une partie inférieure disposées symétriquement par rapport audit plan horizontal. Ces deux parties sont liées entre elles au moyen de vis. Le boîtier ainsi constitué renferme ladite came, ledit galet et une partie du bras oscillant.

Avec ce rotor connu, ledit bras oscillant est lié audit boîtier au moyen d'un premier élément de guidage en rotation et d'un deuxième élément de guidage en rotation. Le premier élément de guidage est disposé à l'intérieur dudit boîtier dans le voisinage dudit galet. Ce premier élément de guidage est lié rigidement à ladite partie supérieure et à ladite partie inférieure du boîtier au moyen de vis. Pour sa part le deuxième élément de guidage est disposé à la périphérie dudit boîtier. Ce deuxième élément de guidage comporte un ergot destiné à se prendre dans une forme complémentaire prévue sur ladite partie inférieure du boîtier. Le premier élément de guidage permet également d'arrêter axialement le bras oscillant.

Avec ce rotor connu, le démontage d'un bras oscillant nécessite l'ouverture complète dudit boîtier. Pour ce faire, il est notamment nécessaire de déposer l'ensemble des vis liant ladite partie supérieure à ladite partie inférieure du boîtier. Il est également nécessaire d'enlever toutes les vis liant lesdits premiers éléments de guidage à par exemple ladite partie supérieure. Puis afin de libérer le bras oscillant en question, il faut encore déposer la vis liant alors ladite partie inférieure au premier élément de guidage correspondant. Le démontage d'un bras oscillant est donc relativement pénible à entreprendre et plutôt coûteuse en temps.

Le document **EP 0 723 741 A1** décrit un autre rotor d'une machine de fenaison permettant cette fois un démontage plus rapide et plus aisé du bras oscillant. En effet, cet autre rotor comporte également un boîtier entraîné en rotation lors du travail autour d'un axe vertical et une multitude de bras oscillants disposés en forme de rayons dans un plan horizontal. Chaque bras oscillant est lié de manière pivotante audit boîtier au moyen d'une liaison respective. Ainsi lesdits bras oscillants peuvent pivoter par rapport audit boîtier autour de leur axe longitudinal respectif. A l'une de ses extrémités, ledit bras oscillant comporte un galet excentré dudit axe longitudinal correspondant. Ce galet est destiné à se prendre dans une came, laquelle est fixe lors du travail. Cet agencement du galet et de la came engendre le mouvement d'oscillation dudit bras autour de l'axe longitudinal respectif lors de la rotation du boîtier.

Avec cet autre rotor connu, une partie du bras oscillant proche dudit galet est enveloppée dans un fourreau. La liaison entre ledit bras oscillant et ledit fourreau est réalisé au moyen de deux éléments de guidage en rotation et d'éléments d'arrêt en translation. Ainsi le bras oscillant peut pivoter mais pas se translater par rapport au fourreau correspondant. Pour sa part, le fourreau est lié au boîtier au moyen d'une première portée et d'une deuxième portée. Ces portées sont réalisées au moyen d'un orifice disposé en périphérie du boîtier et au moyen d'un autre orifice situé à l'intérieur du boîtier. Une fois le bras oscillant monté dans le boîtier, la première portée et la deuxième portée sont chacune en vis-à-vis d'une zone du fourreau ayant une forme complémentaire. Ces portées permettent de définir la position radiale du fourreau vue suivant son axe longitudinal. La première portée est avantageusement conique de manière à définir en sus la position axiale du fourreau vue suivant ledit axe longitudinal. Le maintien de la position axiale du fourreau est assuré au moyen d'une bride vissée au boîtier. Avec un tel agencement, pour le démontage d'un bras oscillant il suffit de déboulonner la bride de maintien correspondante. Puis l'ensemble constitué du fourreau et du bras oscillant est libéré du boîtier en glissant au travers des orifices définissant lesdites portées.

Cet autre rotor connu permet certes un démontage plus rapide et plus aisé du bras oscillant. Il comporte néanmoins un inconvénient.

En effet lors du travail, le mouvement oscillant dudit bras s'effectue uniquement à l'interface entre le fourreau et le bras oscillant, c'est à dire au niveau desdits éléments de guidage en rotation. Il n'existe donc aucun mouvement relatif lors du travail entre ledit fourreau et lesdites portées du boîtier. Une immobilité prolongée du fourreau par rapport aux portées peut provoquer avec le temps un phénomène de grippage. Dans un tel cas, le fourreau se trouve coincé dans le boîtier. Le démontage du bras oscillant devient par conséquent problématique.

Le but de la présente invention est notamment de rendre encore plus facile et plus rapide le démontage d'un bras oscillant équipant le rotor d'une machine de fenaison.

A cet effet, le rotor de la présente invention est caractérisé par le fait que ledit bras oscillant comporte au moins une partie destinée à coulisser à l'intérieur dudit au moins un élément de guidage en rotation lors du démontage dudit bras oscillant dudit boîtier.

Ainsi lors du démontage le mouvement de translation relatif entre ledit bras oscillant et le boîtier s'effectue précisément à l'endroit où a lieu lors du travail le mouvement de pivotement relatif entre ledit bras oscillant et le boîtier. Avec le rotor de la présente invention, les surfaces devant coulisser lors du démontage d'un bras oscillant sont donc continuellement en mouvement lors du travail. Tous phénomènes de grippage entre ces deux surfaces sont donc exclus. Le démontage dudit bras oscillant est ainsi facilité.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, vue de dessus, une machine de fenaison conforme à la présente l'invention,
- la **figure 2** représente, vu en coupe et à une autre échelle, un rotor conforme à la présente l'invention,
- la **figure 3** représente, vu en coupe partielle suivant la flèche 3 et à une autre échelle, le rotor de la figure 2.

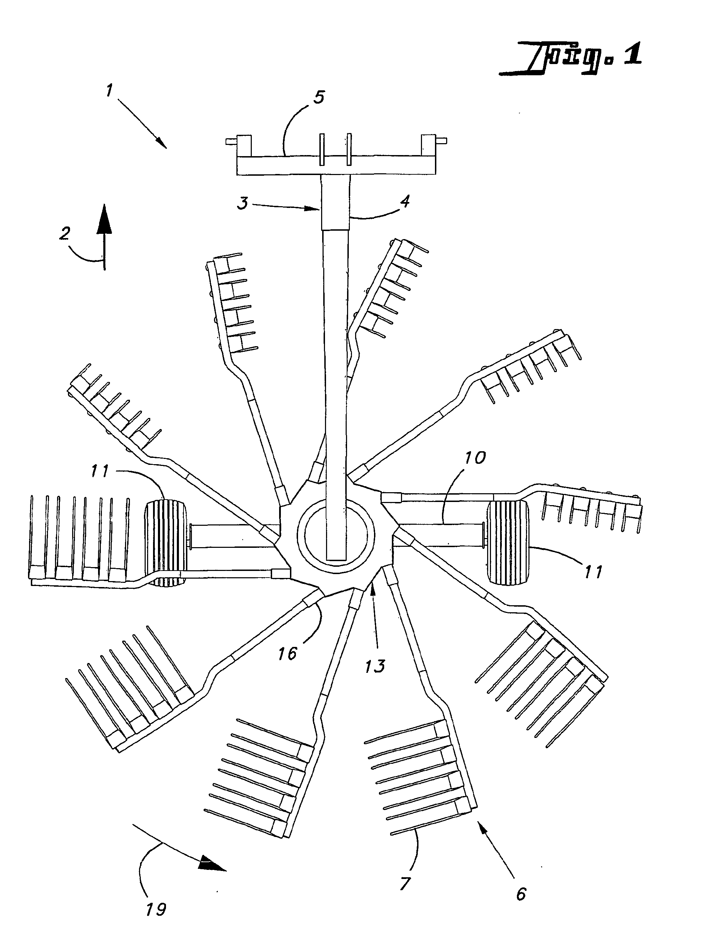

La figure 1 représente, en vue de dessus, une machine de fenaison (1) conforme à la présente invention. Ladite machine de fenaison (1) est destinée à être attelée à un véhicule moteur (non représenté) qui la tire suivant une direction et un sens d'avance indiqué par la flèche (2). Dans la suite de la description, les notions suivantes "avant" et "arrière", "devant" et "derrière" sont définies par rapport au sens d'avance (2) et les notions "droite" et "gauche" sont définies en regardant ladite machine de fenaison (1) de l'arrière dans le sens d'avance (2).

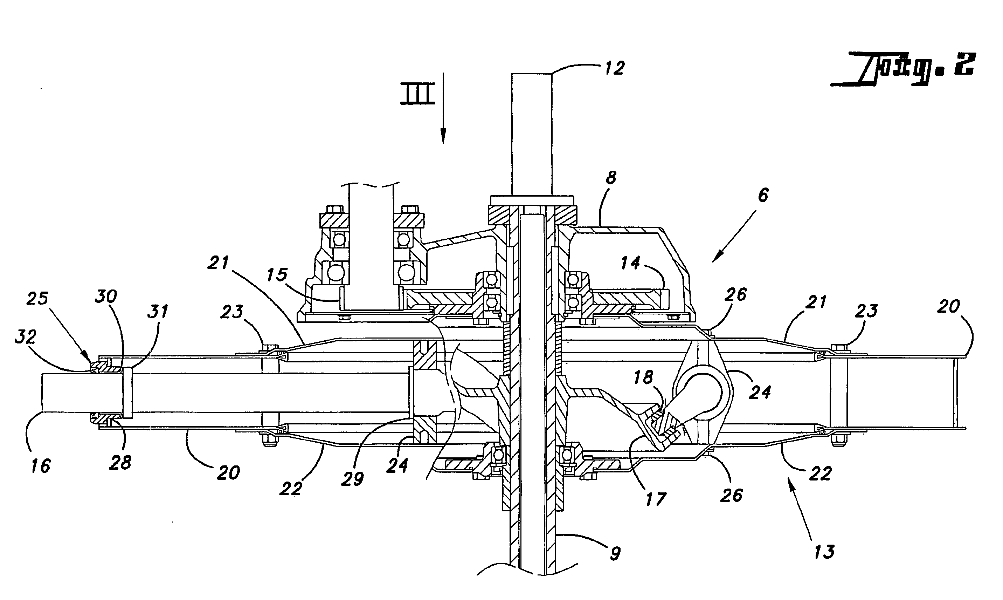

A la lumière de la figure 1, ladite machine de fenaison (1) comporte notamment un bâti (3). Celui-ci est constitué par une poutre (4) qui porte à son extrémité avant un dispositif d'accouplement trois points (5) pour l'accrochage audit véhicule moteur. L'autre extrémité de ladite poutre (4) porte un rotor (6) avec des outils de travail (7) destinés à andainer des produits tels que de l'herbe ou de la paille fauchée se trouvant sur le sol. Ledit rotor (6) possède un carter (8) qui est relié à ladite poutre (4). Comme cela ressort de la figure 2, le carter (8) porte un axe central creux (9) qui est sensiblement vertical ou légèrement incliné vers l'avant. Cet axe (9) comporte à son extrémité inférieure un support (10) avec des roues porteuses (11) situées sous le rotor (6). Ledit support (10) et lesdites roues porteuses (11) peuvent avantageusement coulisser le long dudit axe (9) de manière à régler la distance des outils de travail (7) par rapport au sol. Ce coulissement est commandé par exemple au moyen d'un vérin (12).

Sur la partie de l'axe (9) qui s'étend en dessous du carter (8) est disposé un boîtier (13). Celui-ci est monté sur ledit axe (9) à l'aide de roulements à billes afin de pouvoir être entraîné en rotation. Dans l'exemple de réalisation représenté sur la figure 2, ledit boîtier (13) est constitué d'une couronne (20) prise en sandwich entre un disque supérieur (21) et un disque inférieur (22). Ces trois éléments (20, 21, 22) sont liés entre-eux au moyen de vis (23). Le côté supérieur du boîtier (13) est muni d'une roue dentée (14) qui se situe dans le carter (8). Cette roue (14) engrène avec un pignon (15), lequel peut être relié à une prise de force du véhicule moteur à l'aide d'arbres de transmission intermédiaires (non représentés) connus de l'homme de l'art. Ledit boîtier (13) supporte une multitude de bras oscillant (16). Ceux-ci s'étendent en forme de rayons et portent à leurs extrémités extérieures lesdits outils de travail (7) qui sont constitués par des fourches. Lesdits bras oscillants (16) sont liés audit boîtier (13) de manière à pouvoir tourner sur eux-mêmes. Pour ce faire, il est avantageusement prévu au moins un élément de guidage en rotation (24). Sur la partie dudit axe (9) qui se situe dans ledit boîtier (13) est montée une came fixe (17) destinée à commander lesdits bras oscillants (16) durant le travail d'andainage. Pour cela, chacun desdits bras oscillants (16) possède à son extrémité qui s'étend à l'intérieur dudit boîtier (13) un levier avec un galet (18) qui est guidé dans une gorge de ladite came (17). D'une manière particulièrement avantageuse, chacun desdits bras oscillants (16) peut être démonté dudit boîtier (13) sans avoir à ouvrir ce dernier.

Durant le travail d'andainage, ladite machine de fenaison (1) selon la figure 1 est déplacée sur le sol dans la direction d'avancement (2) au moyen dudit véhicule moteur. Lesdites roues (11) roulent sur le sol et portent ledit rotor (6). Ledit boîtier (13) dudit rotor (6) est alors entraîné en rotation dans le sens indiqué par la flèche (19), autour dudit axe central (9), à partir de l'arbre de prise de force dudit véhicule moteur. Lesdits galets (18) desdits bras oscillants (16) se déplacent alors dans ladite came (17) qui les commande de telle sorte que dans la partie avant de leur trajectoire lesdits outils de travail (7) soient sensiblement verticaux et ramassent les produits se trouvant sur le sol. Ensuite, sur la partie latérale de leur trajectoire, lesdits bras oscillants (16) pivotent pour que lesdits outils de travail (7) se lèvent et déposent les produits ramassés sous la forme d'un andain. Enfin, sur la partie arrière de leur trajectoire, ces outils de travails (7) sont ramenés progressivement dans la position sensiblement verticale pour ramasser les produits.

Selon une caractéristique importante de la présente invention, ledit bras oscillant (16) comporte au moins une partie destinée à coulisser à l'intérieur dudit au moins un élément de guidage en rotation (24) respectif lors du démontage du bras oscillant (16) dudit boîtier (13).

Dans l'exemple de réalisation représenté sur les figures, chacun desdits bras oscillants (16) est lié audit boîtier (13) au moyen d'un premier élément de guidage en rotation (24) et d'un deuxième élément de guidage en rotation (25).

Lesdits premiers éléments de guidage en rotation (24) sont disposés à l'intérieur dudit boîtier (13) et dans le voisinage de ladite came (17). A la lumière de la figure 2, chacun desdits premiers éléments de guidage en rotation (24) est lié d'une part audit disque supérieur (21) et d'autre part audit disque inférieur (22) au moyen de vis (26). Lesdits premiers éléments de guidage en rotation (24) participent ainsi avantageusement à rigidifier ledit boîtier (13). Un tel agencement permet également un éventuel remplacement desdits premiers éléments de guidage en rotation (24) en cas de nécessité. On notera toutefois que lors du démontage dudit bras oscillant (16), ledit premier élément de guidage en rotation correspondant (24) reste à l'intérieur dudit boîtier (13).

Pour leur part, lesdits deuxièmes éléments de guidage en rotation (25) sont liés de manière amovible, au moyen de vis (27), à la périphérie de ladite couronne (20). Ledit premier élément de guidage en rotation (24) et ledit deuxième élément de guidage en rotation correspondant (25) sont alignés suivant un même axe, l'axe longitudinal dudit bras oscillant (16). Vu suivant l'axe longitudinal dudit bras oscillant (16), ledit deuxième élément de guidage en rotation (25) est de préférence positionné radialement au moyen d'un logement (28) prévu dans ladite couronne (20).

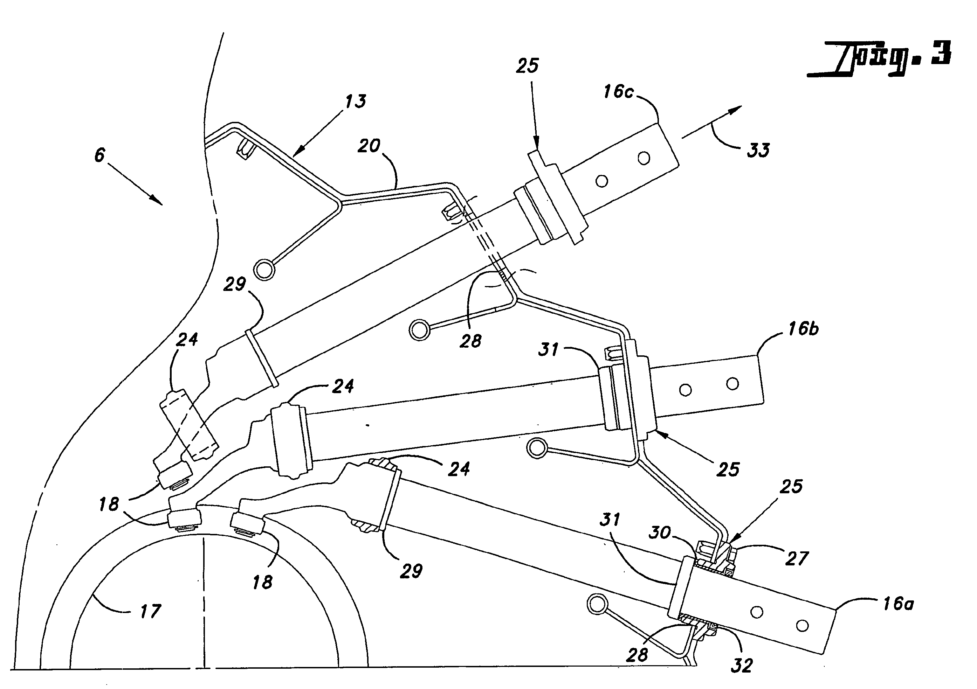

La figure 3 représente différentes étapes du démontage d'un bras oscillant (16) selon la présente invention. Ledit bras oscillant (16a) représenté en bas de la figure est en position montée ; Ledit premier élément de guidage en rotation (24) et ledit deuxième élément de guidage en rotation correspondant (25) sont vus en coupe. Ledit bras oscillant (16b) représenté au milieu de la figure a subit la première étape de démontage. Ledit bras oscillant (16c) représenté en haut de la figure est en phase d'extraction.

A la lumière des figures 2 et 3, ledit premier élément de guidage en rotation (24) s'appuie directement sur ledit bras oscillant correspondant (16). Il est en sus prévu une première butée axiale (29) liée audit bras oscillant (16) et destinée à venir en contact avec ledit premier élément de guidage en rotation (24). Ladite première butée axiale (29) évite une entrée excessive dudit bras oscillant (16) dans ledit boîtier (13). Ledit deuxième élément de guidage en rotation (25) par contre s'appuie sur ledit bras oscillant (16) via une bague (30) de manière à réduire les frottements à cet endroit. Il est également prévu une deuxième butée axiale (31) liée audit bras oscillant (16) et destinée à venir en contact avec ledit deuxième élément de guidage en rotation (25). Ladite deuxième butée axiale (31) évite cette fois une sortie dudit bras oscillant (16). Ladite première butée axiale (29) et ladite deuxième butée axiale (31) définissent ainsi parfaitement la position axiale dudit bras oscillant (16). Ledit deuxième élément de guidage en rotation (25) comporte en sus un joint (32) en contact avec ledit bras oscillant (16) et un joint (non représenté) en contact avec ladite couronne (20). Ledit deuxième élément de guidage en rotation (25) maintient ainsi l'étanchéité dudit boîtier (13). En effet, ledit boîtier (13) est destiné à contenir un lubrifiant pour graisser notamment ladite came (17), lesdits galets (18), et la liaison entre ledit premier élément de guidage en rotation (24) et ledit bras oscillant (16).

A la lumière dudit bras oscillant (16b) représenté au milieu de la figure 3, la première étape du démontage consiste à enlever ladite vis (27) retenant ledit deuxième élément de guidage en rotation (25). Puis en tirant suivant le sens indiqué par la flèche (33), ledit bras oscillant (16) coulisse au travers dudit premier élément de guidage en rotation (24), lequel reste à l'intérieur dudit boîtier (13). En tirant ledit bras oscillant (16) suivant le sens indiqué par la flèche (33), ledit deuxième élément de guidage en rotation (25) est également extrait dudit logement (28). La sortie complète dudit bras oscillant (16) est réalisée en faisant passer ledit levier et ledit galet (18) au travers dudit logement (28). A la lumière dudit bras oscillant (16c) représenté en haut de la figure 3, dans cet exemple de réalisation ledit levier et ledit galet (18) passe également au travers dudit premier élément de guidage en rotation (24) lors du démontage.

Lors du montage dudit bras oscillant (16), on reprend ces étapes en sens inverse. On introduit tout d'abord le galet (18), le levier et l'extrémité dudit bras oscillant (16) au travers dudit logement (28) puis au travers dudit premier élément de guidage en rotation (24). Lorsque ledit galet (18) est engagé dans ladite came (17), on met en place ensuite ledit deuxième élément de guidage en rotation (25) dans ledit logement (28). Finalement on procède au serrage de ladite vis (27).

La machine de fenaison (1) et le rotor (6) qui viennent d'être décrits ne sont qu'un exemple qui ne saurait en aucun cas limiter le domaine de protection défini par les revendications suivantes.

En effet, selon un autre exemple de réalisation non représenté, ledit premier élément de guidage en rotation (24) s'appuie sur ledit bras oscillant (16) via une bague de manière à réduire les frottements.

Selon encore un autre exemple de réalisation non représenté, ledit galet (18) et ledit levier contournent ledit premier élément de guidage en rotation (24). Ainsi ledit galet (18) et ledit levier ne passent pas au travers de ce dernier lors du démontage dudit bras oscillant (16).

## Revendications

1. Rotor d'une machine de fenaison, ledit rotor (6) comportant un boîtier (13) entraîné en rotation lors du travail autour d'un axe dirigé vers le haut et au moins un bras oscillant (16) disposé dans un plan sensiblement perpendiculaire audit axe dirigé vers le haut, lequel bras oscillant (16) étant destiné à supporter des outils de travail (7), ledit au moins un bras oscillant (16) est lié audit boîtier (13) au moyen d'au moins un élément de guidage en rotation (24) de manière à pouvoir tourner sur lui-même, ***caractérisé par le fait que*** ledit bras oscillant (16) comporte au moins une partie destinée à coulisser à l'intérieur dudit au moins un élément de guidage en rotation (24) lors du démontage du bras oscillant (16) dudit boîtier (13).

2. Rotor selon la revendication 1, ***caractérisé par le fait que*** ledit boîtier (13) est constitué d'au moins une couronne (20) et d'un disque (21, 22) liés ensemble de manière amovible au moyen de vis (23), et ***par le fait que*** le démontage dudit bras oscillant (16) ne nécessite pas l'ouverture dudit boîtier (13).

3. Rotor selon la revendication 1 ou 2, ***caractérisé par le fait que*** ledit au moins un élément de guidage en rotation (24) reste à l'intérieur dudit boîtier (13) lors du démontage dudit bras oscillant (16).

4. Rotor selon l'une quelconque des revendications 1 à 3, ***caractérisé par le fait que*** ledit au moins un élément de guidage en rotation (24) est lié de manière amovible audit boîtier (13) au moyen de vis (26).

5. Rotor selon l'une quelconque des revendications 1 à 4, ***caractérisé par le fait que*** ledit bras oscillant (16) comporte un levier et un galet (18), *et **par le fait que*** lors du démontage dudit bras oscillant (16) ledit levier et ledit galet (18) passent au travers dudit au moins un élément de guidage en rotation (24).

6. Rotor selon l'une quelconque des revendications 1 à 5, ***caractérisé par le fait que*** ledit bras oscillant (16) comporte une première butée axiale (29) destinée à venir en contact avec ledit au moins un élément de guidage en rotation (24).

7. Rotor selon l'une quelconque des revendications 1 à 6, ***caractérisé par le fait que*** ledit rotor (6) comporte un premier élément de guidage en rotation (24) et un deuxième élément de guidage en rotation (25).

8. Rotor selon la revendication 7, ***caractérisé par le fait que*** ledit deuxième élément de guidage en rotation (25) est lié à la périphérie de la couronne (20) dudit boîtier (13).

9. Rotor selon la revendication 7 ou 8, ***caractérisé par le fait que*** ledit bras oscillant (16) comporte une deuxième butée axiale (31) destinée à venir en contact avec ledit deuxième élément de guidage en rotation (25).

10. Machine de fenaison comportant au moins un rotor selon l'une quelconque des revendications 1 à 9.

## Patentansprüche

1. Rotor einer Heuwerbungsmaschine, wobei der Rotor (6) ein Gehäuse (13), das im Betrieb in Drehung um eine nach oben gerichtete Achse versetzt wird, und mindestens einen Schwenkarm (16) umfasst, der in einer im Wesentlichen auf die nach oben gerichtete Achse senkrechten Ebene angeordnet ist, wobei der Schwenkarm (16) dazu bestimmt ist, Arbeitswerkzeuge (7) zu tragen, wobei der mindestens eine Schwenkarm (16) mit dem Gehäuse (13) mit Hilfe von mindestens einem Drehführungselement (24) verbunden ist, um sich um sich selbst drehen zu können, ***dadurch gekennzeichnet,* dass** der Schwenkarm (16) mindestens einen Teil umfasst, der dazu bestimmt ist, im Inneren des mindestens einen Drehführungselements (24) bei der Demontage des Schwenkarms (16) vom Gehäuse (13) zu gleiten.

2. Rotor nach Anspruch 1, ***dadurch gekennzeichnet,* dass** das Gehäuse (13) von mindestens einem Kranz (20) und einer Scheibe (21, 22) gebildet ist, die abnehmbar mit Hilfe von Schrauben (23) miteinander verbunden sind, ***und dadurch,*** dass die Demontage des Schwenkarms (16) nicht das Öffnen des Gehäuses (13) erfordert.

3. Rotor nach Anspruch 1 oder 2, ***dadurch gekennzeichnet,* dass** das mindestens eine Drehführungselement (24) bei der Demontage des Schwenkarms (16) im Inneren des Gehäuses (13) bleibt.

4. Rotor nach irgend einem der Ansprüche 1 bis 3, ***dadurch gekennzeichnet,* dass** das mindestens eine Drehführungselement (24) abnehmbar mit dem Gehäuse (13) mit Hilfe von Schrauben (26) verbunden ist.

5. Rotor nach irgend einem der Ansprüche 1 bis 4, ***dadurch gekennzeichnet,* dass** der Schwenkarm (16) einen Hebel und eine Rolle (18) umfasst, ***und*** ***dadurch,*** dass bei der Demontage des Schwenkarms (16) der Hebel und die Rolle (18) durch das mindestens eine Drehführungselement (24) verlaufen.

6. Rotor nach irgend einem der Ansprüche 1 bis 5, ***dadurch gekennzeichnet,* dass** der Schwenkarm (16) einen ersten Axialanschlag (29) umfasst, der dazu bestimmt ist, mit dem mindestens einen Drehführungselement (24) in Kontakt zu kommen.

7. Rotor nach irgend einem der Ansprüche 1 bis 6, ***dadurch gekennzeichnet,* dass** der Rotor (6) ein erstes Drehführungselement (24) und ein zweites Drehführungselement (25) umfasst.

8. Rotor nach Anspruch 7, ***dadurch gekennzeichnet,* dass** das zweite Drehführungselement (25) mit der Peripherie des Kranzes (20) des Gehäuses (13) verbunden ist.

9. Rotor nach Anspruch 7 oder 8, ***dadurch gekennzeichnet,* dass** der Schwenkarm (16) einen zweiten Axialanschlag (31) umfasst, der dazu bestimmt ist, mit dem zweiten Drehführungselement (25) in Kontakt zu kommen.

10. Heuwerbungsmaschine, die mindestens einen Rotor nach irgend einem der Ansprüche 1 bis 9 umfasst.

## Claims

1. Rotor of a haymaking machine, the said rotor (6) comprising a casing (13) driven in rotation during work about an upwardly directed axis and at least one oscillating arm (16) arranged in a plane substantially perpendicular to said upwardly directed axis, the said oscillating arm (16) being intended to support working tools (7), the said at least one oscillating arm (16) is connected to the said casing (13) by means of at least one rotation guide element (24) so as to be able to rotate on itself, ***characterized in* that** the said oscillating arm (16) comprises at least one portion intended to slide inside the said at least one rotation guide element (24) when the oscillating arm (16) is removed from the said casing (13).

2. Rotor according to Claim 1, ***characterized in* that** the said casing (13) consists of at least one ring (20) and one disc (21, 22) removably connected together by means of screws (23) ***and*** ***in* that** the removal of the said oscillating arm (16) does not require the said casing (13) to be opened.

3. Rotor according to Claim 1 or 2, ***characterized in* that** the said at least one rotation guide element (24) remains inside the said casing (13) when the said oscillating arm (16) is removed.

4. Rotor according to any one of Claims 1 to 3, ***characterized in* that** the said at least one rotation guide element (24) is removably connected to the said casing (13) by means of screws (26).

5. Rotor according to any one of Claims 1 to 4, ***characterized in* that** the said oscillating arm (16) comprises a lever and a roller (18) ***and*** ***in* that** during the removal of the said oscillating arm (16) the said lever and the said roller (18) pass through the said at least one rotation guide element (24).

6. Rotor according to any one of Claims 1 to 5, ***characterized in* that** the said oscillating arm (16) comprises a first axial abutment (29) intended to come into contact with the said at least one rotation guide element (24).

7. Rotor according to any one of Claims 1 to 6, ***characterized in* that** the said rotor (6) comprises a first rotation guide element (24) and a second rotation guide element (25).

8. Rotor according to Claim 7, ***characterized in* that** the said second rotation guide element (25) is connected to the periphery of the ring (20) of the said casing (13).

9. Rotor according to Claim 7 or 8, ***characterized in* that** the said oscillating arm (16) comprises a second axial abutment (31) intended to come into contact with the said second rotation guide element (25).

10. Haymaking machine comprising at least one rotor according to any one of Claims 1 to 9.
